# DEMANDE DE BREVET EUROPEEN

(11) **EP 2 245 923 A1**
(43) Date de publication de la demande: **03.11.2010**
(21) Numéro de dépôt: 09713156.9
(22) Date de dépôt: 12.02.2009
(51) Int. Cl.: A01K 1/01

(54) **TOILETTES PUBLIQUES POUR CHIENS**

(30) Priorité: 22.02.2008 ES 200800499
(71) Demandeur: Chatel, Claude, 29660 Nueva Andalucia Málaga (ES)
(72) Inventeur: Glimes, Philippe, 29680 Estepona-Malaga (ES)
(74) Mandataire: De Groote, Christophe
(86) Numéro de dépôt international: PCT/ES2009/000080
(87) Numéro de publication internationale: WO 2009/103830

(57) **Abrégé**

L'invention concerne des toilettes susceptibles d'être implantées dans un lieu quelconque, soit sur une surface soit encastrées dans un moule préfabriqué (8) dans le sol, comprenant essentiellement une bande sans fin (3) normalement immobile sur laquelle des chiens peuvent déféquer, laquelle bande sans fin (3) est ensuite mise en mouvement manuellement ou automatiquement pour assurer l'évacuation des excréments. L'invention comporte un système de nettoyage qui pulvérise de l'eau ou un système de nettoyage qui dépose du sable sur la bande. Dans ce dernier cas, une fois que le chien a déféqué sur la bande et que la bande (3) a effectué le mouvement correspondant, le sable tombe sur une seconde bande inférieure (3') qui l'achemine jusqu'à un réservoir de stockage et de dosage (22).

## Description

### OBJET DE L'INVENTION

La présente invention concerne des toilettes publiques pour chiens dont le but évident est de former un moyen dans lequel les chiens peuvent déféquer et uriner en toute propreté avec élimination des excréments, sans en nécessiter la manipulation par le gardien du chien.

L'invention a pour objet de maintenir en permanence la propreté des voies publiques, parcs et tout autre lieu, sans les excréments classiques déféqués par les chiens et sans nécessiter que leurs propriétaires ou gardiens ramassent et déposent ces excréments dans des poubelles ou contenants de déchets, en évitant ainsi de polluer l'environnement.

### ÉTAT DE LA TECHNIQUE

L'acquisition importante par les citadins de chiens comme animaux de compagnie et la nécessité de faire sortir ceux-ci dans la rue pour les faire déféquer se traduisent pas l'abandon d'une quantité énorme d'excréments dans les parcs, sur les voies publiques, les zones de passage, etc. dans la mesure où bon nombre de propriétaires ne se soucient guère de ramasser les excréments de leurs chiens et de les déposer, dans un sac, à l'intérieur d'un contenant de déchets, si bien que la saleté occasionnée par les excréments devient chaque jour plus importante, avec les risques associés de pollution de l'environnement et de contamination des personnes, d'écrasement par les personnes des excréments abandonnés, de danger posé aux enfants jouant dans les parcs, sans compter un manque total d'hygiène, les mauvaises odeurs, le désagrément visuel, etc.

Si certaines villes offrent des lieux concrets permettant aux chiens de déféquer, ceux-ci se limitent à des enceintes à l'air libre permettant uniquement d'éviter la présence d'excréments aux alentours de ces zones à condition toutefois que les propriétaires amènent leurs chiens jusqu'à ces enceintes puisque beaucoup d'entre eux ne sont pas respectueux de l'environnement et laissent leurs chiens déféquer n'importe où, en abandonnant notamment les excréments.

Ces enceintes nécessitent par ailleurs un nettoyage quotidien, lequel n'évite ni la pollution ni les odeurs, sans compter le désagrément éprouvé par les voisins, personne en effet ne souhaitant voir s'implanter ces enceintes devant son lieu d'habitation.

### DESCRIPTION DE L'INVENTION

Les toilettes publiques pour chiens préconisées ont été conçues dans le but de remédier aux problèmes susmentionnés, sur la base d'une solution particulièrement efficace et avec élimination totale des excréments suite à la défécation du chien.

De façon plus concrète, les toilettes sont formées à partir d'une structure comprenant une bande sans fin normalement immobile et à laquelle le chien accèdera latéralement, de manière à ce que, suite à la défécation, la bande soit actionnée automatiquement de façon autonome par un moteur susceptible d'être alimenté directement par le réseau électrique, ou par l'énergie solaire, de manière à évacuer les excréments par son mouvement d'avance, soit sur un contenant, un sac ou autres du même genre prévus à cet effet et retirables périodiquement, soit directement dans un conduit raccordé à l'égout, etc. En cas de panne d'alimentation électrique, le fonctionnement peut se faire manuellement par une manivelle.

Dans une variante de réalisation préférée ou principale, la bande comportera un revêtement ou sera elle-même constituée de gazon artificiel, éventuellement saupoudré d'un produit attirant les chiens, bande à gazon sur laquelle le chien effectuera la défécation et complétée par des moyens de projection d'eau permettant son nettoyage voire d'entraînement vers l'égout ou le système d'assainissement public, les excréments étant évacués par passage de la bande vers un fond incliné, la projection d'eau facilitant cette évacuation.

Cette réalisation comprendra un alignement de buses de projection d'eau par-dessus la bande, à proximité et face à son extrémité de sortie, ainsi qu'un groupe de buses situé par-dessous permettant de nettoyer le gazon proprement dit de la bande, voire des buses orientées judicieusement permettant de nettoyer le fond et un diffuseur ou une buse face à un poteau suspendu verticalement par-dessus la bande pour permettre au chien d'uriner.

Si l'actionnement de la bande ainsi que le fonctionnement des buses de projection d'eau peuvent s'effectuer manuellement par le propriétaire du chien, suite à la défécation, ceux-ci se feront toutefois de façon automatique, comme indiqué plus haut, au moyen d'un détecteur de présence et/ou de mouvement, ainsi que d'un temporisateur de mise en marche de la bande voire de valves permettant aux groupes de buses ou de diffuseurs de projeter l'eau au moment opportun.

Une couche de sable ou d'un autre produit approprié peut être préalablement déposée sur la bande sans fin d'entraînement des excréments grâce, par exemple, à une vis sans fin ou à un moyen doseur quelconque, à partir d'un réservoir de stockage et de dosage du sable, de manière à ce que le chien effectue les défécations sur le sable en évitant les éventuels résidus et obstacles sur la bande. Par ailleurs, en cas d'utilisation de sable, on installera, sous ladite première bande, une seconde bande de réception du sable évacué de la première bande, suite à son passage par une grille permettant son filtrage pour qu'il tombe sur cette seconde bande située sous la première, laquelle grille empêchant toutefois le passage des excréments pour les écarter et les évacuer vers le contenant ou le sac de ramassage, ou vers la fosse d'égout.

La seconde bande récupérera le sable de la bande supérieure pour le ramener au réservoir de stockage et de dosage, en vue d'une nouvelle utilisation de ce sable, autrement dit de son recyclage.

Il est dans tous les cas possible d'appliquer par quelque moyen approprié un produit désinfectant biodégradable, soit conjointement avec l'eau, ou sur le sable dans la version correspondante, soit préalablement à la projection de l'eau, ou comme cela s'avère le plus commode.

Le montage de l'ensemble s'effectuera sur un moule préfabriqué en fibre susceptible d'être encastré dans le sol ou de reposer directement sur la surface du trottoir.

Les toilettes comporteront dans tous les cas un coffret de mise en place et de protection de moteurs, d'une pompe à eau, d'un réservoir de produits désinfectants et/ou attractifs, d'un petit PLC pour la commande des manoeuvres automatiques, d'éléments de régulation, d'une pompe de refoulement d'eau en cas de pression insuffisante dans le réseau, etc.

Les avantages des toilettes publiques pour chiens décrites sont manifestes, les plus importants s'établissant comme suit :
- Élimination totale de la voie publique (rues, parcs, etc.) des excréments de chiens classiques et abondants que l'on trouve actuellement partout.
- Possibilité d'implantation dans un lieu quelconque, à la surface même du sol, voire en encastrement dans une cavité d'ouvrage civil ménagée à cet effet.
- Possibilité de mise en oeuvre dans des tailles ou des dimensions différentes adaptées à un espace quelconque.
- Environnement plus hygiénique.
- Apparence environnementale améliorée et plus agréable.
- Lutte contre la pollution de l'environnement due aux excréments de chiens.
- Possibilité de complément par une couverture de protection supérieure.
- Possibilité de complément par un toit solaire permettant de produire l'énergie nécessaire au fonctionnement automatique des différents moyens faisant partie de l'ensemble.
- Possibilité de complément par un éclairage, avec ou sans détecteur de présence.
- Possibilité d'incorporer des détecteurs de mouvement permettant la mise en marche automatique des moyens d'autonettoyage déclenchée lorsque le chien quitte la bande.
- Installation inutile de distributeurs de sacs, ce qui permet d'éviter l'utilisation d'une multitude de sacs plastiques pour le ramassage des excréments.

### DESCRIPTION DES DESSINS

Dans le but de compléter la description qui va suivre et de faciliter la compréhension des caractéristiques de l'invention, conformément à un exemple préféré de réalisation pratique de celle-ci, on joint comme partie intégrante de cette description un jeu de dessins dans lesquels, à titre illustratif et non limitatif :

La figure 1 montre une représentation suivant une perspective générale et schématique de toilettes publiques pour chiens dans leur version de base ou domestique, avec évacuation par un conduit vers l'égout ou le système d'assainissement.

La figure 2 montre une perspective analogue à celle de la figure précédente, avec des moyens de nettoyage à l'eau de la bande.

La figure 3 montre une représentation suivant une perspective générale et schématique de toilettes publiques pour chiens, avec le système de nettoyage par projection d'eau, sur le point d'être encastrées dans un moule préfabriqué.

La figure 4 montre une vue générale suivant une élévation latérale schématique de toilettes publiques pour chiens utilisant du sable sur la bande principale ou supérieure.

### RÉALISATION PRÉFÉRÉE DE L'INVENTION

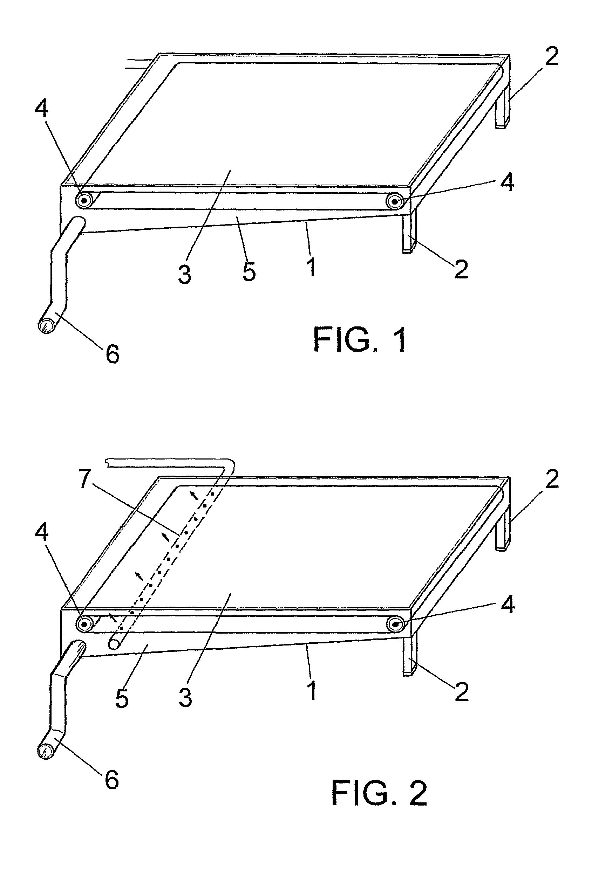

Comme l'illustrent les figures 1 et 2, montrant les toilettes pour chiens dans leur version de base ou domestique, celles-ci comprennent une structure ou bâti (1) comportant des pieds d'appui (2) et, sur cette structure (1), une bande sans fin (3) montée entre une paire de rouleaux (4), ladite bande étant actionnée automatiquement par un moteur, suite à la défécation du chien, celui-ci devant accéder à la bande (3) par un des côtés.

Le fond (5) est incliné vers un côté comportant un conduit d'évacuation ou de sortie (6), un broyeur pouvant éventuellement être monté préalablement au raccordement au système d'assainissement.

Ladite bande (3), une fois que le chien aura déféqué et l'aura quittée, se mettra en marche comme indiqué plus haut en entraînant les excréments jusqu'à l'extrémité de sortie de manière à les évacuer par le conduit (6) raccordé à l'égout ou au système d'assainissement du réseau public. Lesdites toilettes peuvent être complétées par un système de nettoyage à l'eau, comme l'illustre la figure 2, lequel comprend un conduit inférieur (7) sous la bande (3) permettant d'y projeter de l'eau afin de la nettoyer, l'eau entraînant par ailleurs vers la sortie les excréments évacués par l'extrémité de la bande (3).

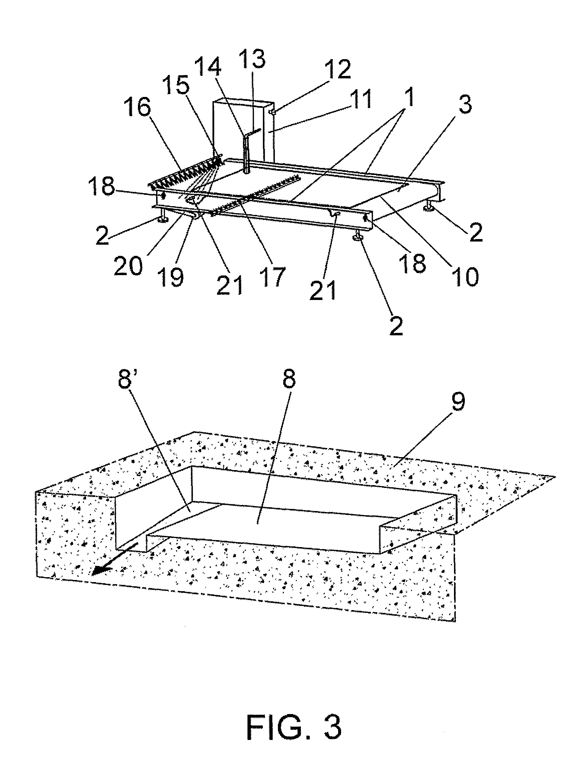

La figure 3 montre les toilettes dans leur version avec nettoyage à l'eau et destinées à être encastrées dans un moule préfabriqué (8) dont le périmètre intérieur est doté d'une bande de gomme (9) assurant la protection de la structure (1) correspondante à partir de laquelle sont constituées les toilettes de cette figure 3, lesquelles, à l'instar du cas précédent, comprendront les pieds d'appui (2) dotés de moyens de réglage permettant leur mise à niveau.

Dans ce cas, la bande (3) montée sur la structure (1) est complétée par une plateforme flottante (10), laquelle est dotée d'un revêtement de gazon artificiel, voire constituée de ce matériau.

Dans cette variante de réalisation, les toilettes comprennent un coffret (11) de mise en place et de commande de moteurs, de pompes à eau, d'un réservoir de produits attractifs et/ou désinfectants, etc., lequel comporte un interrupteur général (12), et duquel émerge un tube (13) dont l'extrémité externe fait saillie verticalement vers le bas pour projeter de l'eau à travers le diffuseur ou la buse (14) correspondant(e), pour nettoyer un poteau placé verticalement par-dessus la bande (3) pour permettre au chien d'uriner.

Dans une zone qui fait face à un canal (8') ménagé à une des extrémités du moule (8), il est prévu un autre diffuseur ou une autre buse de projection d'eau (15) permettant d'entraîner les excréments et autres matières solides évacués par passage de la bande (3) vers le conduit d'égout, tant le fond du moule (8) que ce canal (8') présentant une inclinaison favorisant l'évacuation de l'eau et des excréments.

Un alignement de buses de projection d'eau (16) face à l'extrémité de sortie ou d'évacuation de la bande (3) permet également de décoller les excréments de la bande, un alignement inférieur et transversal de buses de projection d'eau (17) permettant finalement de nettoyer la bande (3) lors de son passage par la partie inférieure.

Les toilettes ainsi constituées, correspondant à la réalisation montrée à la figure 3, sont complétées par des supports (18) de roulements permettant la rotation des rouleaux (4) correspondants sur lesquels passe la bande (3), et comprennent en outre un rouleau brosse inférieur et transversal (19) permettant de laver la bande (3), ce rouleau brosse étant sollicité vers une position de pression contre la bande (3) par une lame métallique, un ressort (20) ou autres du même genre. Des détecteurs de proximité (21) permettent en outre de déceler un poids sur la bande et se mettent en fonctionnement après le départ du chien.

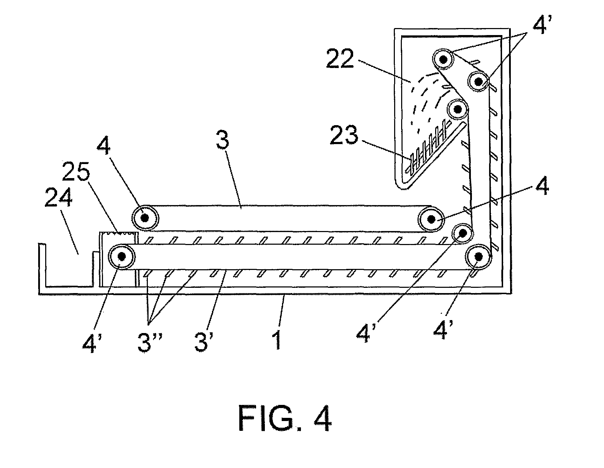

La figure 4 illustre les toilettes dans la version avec sable, la structure générale (1) comportant dans ce cas un réservoir (22) de stockage et de dosage de sable, au moyen d'une vis sans fin (23) ou autre du même genre, vers la bande (3) correspondante située par-dessus la plateforme flottante (10). On place sous ladite bande (3) une seconde bande (3') dotée de protubérances ou projections transversales (3"), destinée à recevoir le sable provenant de la bande supérieure ou principale (3) qui tombe, avec les excréments, de l'extrémité de sortie de cette bande (3) vers une grille (25) par laquelle passe le sable et séparant les excréments, lesquels sont envoyés jusqu'à un canal (24) de la structure (1) permettant de les évacuer définitivement vers un conduit d'égout ou d'assainissement public. Comme on peut le constater, le sable récupéré par la bande inférieure (3") est entraîné par celle-ci pour être renvoyé au réservoir (22).

Cette figure 4 illustre également les rouleaux (4) par lesquels passe la bande (3) ainsi que les rouleaux (4') par lesquels passe la bande inférieure (3').

Aussi bien dans ce cas de réalisation de la figure 4 que dans le cas précédent de la figure 3, l'ensemble peut être monté sur un moule (8) encastré dans le sol, la bande restant au ras dudit sol, le moule préfabriqué (8) ainsi que l'ensemble des toilettes pouvant également être montés directement sur le sol sans y être encastrés.

Il est par ailleurs prévu, dans tous les cas, d'entourer l'enceinte d'implantation des toilettes de jardins de plantes ne permettant l'accès auxdites toilettes que par la partie latérale des jardins de manière à créer une apparence écologique agréable à regarder et à dissimuler autant que possible l'ensemble des toilettes.

## Revendications

1. Toilettes publiques pour chiens, susceptibles d'être implantées dans un lieu quelconque et permettre aux chiens de déféquer en dehors de la voie publique, des parcs ou autres lieux, **caractérisées en ce qu'**elles sont constituées à partir d'une structure (1) dotée de pieds d'appui (2), susceptible d'être montée dans un moule préfabriqué (8) encastré ou non dans le sol, une bande sans fin (3) à laquelle le chien pourra accéder pour déféquer étant montée sur ladite structure (1), ladite bande passant entre des rouleaux (4) et restant normalement immobile pour se mettre en fonctionnement dès que le chien la quitte et entraîner les excréments vers l'extrémité de sortie pour les évacuer vers un contenant, un sac ou autres du même genre, destinés à être retirés ultérieurement et périodiquement, à travers un conduit (6) vers le réseau d'égout ou d'assainissement public correspondant.

2. Toilettes publiques pour chiens selon la revendication 1, **caractérisées en ce qu'**elles incorporent un conduit transversal et inférieur (7) sous la bande (3) permettant d'y projeter de l'eau et de la nettoyer.

3. Toilettes publiques pour chiens selon les revendications précédentes, **caractérisées en ce que** la bande sans fin (3) est superposée à une plateforme flottante (10), et complétées par un coffret (11) de mise en place de moteurs, pompes et moyens de commande de fonctionnement.

4. Toilettes publiques pour chiens selon les revendications précédentes, **caractérisées en ce qu'**elles comportent un système de projection d'eau sur la bande sans fin (3), ledit système comprenant un diffuseur ou une buse de projection (14) permettant de nettoyer un type de poteau vertical placé par-dessus la bande (3) pour permettre au chien d'uriner, lesdites toilettes publiques pour chiens comprenant en outre des diffuseurs ou buses de projection d'eau (15) permettant d'entraîner les excréments et l'eau provenant de la bande sans fin (3) vers un conduit d'évacuation raccordé à l'égout, ainsi qu'un alignement de diffuseurs ou buses de projection d'eau (16) face à l'extrémité de sortie de la bande sans fin (3) permettant de décoller les excréments, un autre alignement de diffuseurs ou buses de projection d'eau (17) étant situé sous la bande sans fin (3) pour la nettoyer.

5. Toilettes publiques pour chiens selon la revendication 4, **caractérisées en ce que** la bande sans fin (3) comporte un revêtement de gazon artificiel.

6. Toilettes publiques pour chiens selon la revendication 4, **caractérisées en ce que** la bande sans fin (3) est constituée de gazon artificiel.

7. Toilettes publiques pour chiens selon les revendications 1 et 3, **caractérisées en ce qu'**elles comportent un réservoir (22) de stockage et de dosage de sable sur la bande sans fin (3), sous laquelle est montée une seconde bande (3') dotée de protubérances transversales (3") permettant de récupérer le sable qui sort de la bande (3) lors du mouvement d'avance de celle-ci, et de transporter ledit sable jusqu'au réservoir (22) dans lequel il est à nouveau déposé en vue de sa réutilisation, une vis sans fin (23) permettant de doser le sable du réservoir (22) à ladite bande sans fin (3).

8. Toilettes publiques pour chiens selon la revendication 6, **caractérisées en ce qu'**une grille (25) placée à la sortie de la bande (3) permet de filtrer le sable vers la bande sans fin (3') et de séparer les excréments vers un canal d'évacuation (24) de ceux-ci.

9. Toilettes publiques pour chiens selon les revendications précédentes, **caractérisées en ce que** le moule préfabriqué (8), dans lequel aussi bien la structure correspondant à l'ensemble avec le système de nettoyage à l'eau que la structure correspondant à l'ensemble avec sable sont susceptibles d'être mises en place, présente un fond incliné, son extrémité de sortie formant un canal incliné (8') permettant d'évacuer les excréments, les matières solides et l'eau.

10. Toilettes publiques pour chiens selon les revendications précédentes, **caractérisées en ce que** la bande (3) est actionnée automatiquement par un moteur qui reçoit les signaux d'un détecteur de poids ou d'un détecteur de mouvement.

11. Toilettes publiques pour chiens selon les revendications 1 à 9, **caractérisées en ce que** la bande (3) est éventuellement actionnée manuellement par manivelle.

12. Toilettes publiques pour chiens selon les revendications précédentes, **caractérisées en ce qu'**elles incorporent éventuellement une couverture susceptible de comporter des moyens de production d'énergie solaire.

13. Toilettes publiques pour chiens selon les revendications précédentes, **caractérisées en ce que** la bande est éventuellement imprégnée d'un produit attractif pour le chien.

14. Toilettes publiques pour chiens selon les revendications précédentes, **caractérisées en ce qu'**il est éventuellement possible d'appliquer un produit désinfectant biodégradable.

15. Toilettes publiques pour chiens selon les revendications précédentes, **caractérisées en ce qu'**elles comportent éventuellement, outre les détecteurs de mouvement et de poids, des temporisateurs et des électrovalves permettant de mettre en fonctionnement les différents moyens d'actionnement de la bande (3), les diffuseurs de buses de projection d'eau (14, 15, 16 et 17) et le rouleau brosse de nettoyage (19) situé sous la bande pour le nettoyage à l'eau.
